(19) **Europäisches Patentamt**
**European Patent Office**
**Office européen des brevets**

(11) **EP 1 932 205 B1**

(12) **EUROPÄISCHE PATENTSCHRIFT**

(45) Veröffentlichungstag und Bekanntmachung des Hinweises auf die Patenterteilung:
**25.11.2009   Patentblatt 2009/48**

(51) Int Cl.:
***H01P 1/20*** *(2006.01)*

(21) Anmeldenummer: **06829065.9**

(86) Internationale Anmeldenummer:
**PCT/EP2006/011018**

(22) Anmeldetag: **16.11.2006**

(87) Internationale Veröffentlichungsnummer:
**WO 2007/057196 (24.05.2007 Gazette 2007/21)**

(54) **GLEICHSPANNUNGS- UND/ODER NF-AUSKOPPLUNG AUS EINER HF-STRECKE**

DC AND/OR AF OUTPUT FROM AN RF PATH

DÉCOUPLAGE À TENSION CONTINUE ET/OU BASSE FRÉQUENCE À PARTIR D UNE ZONE HAUTE FRÉQUENCE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.11.2005   DE 102005054916**

(43) Veröffentlichungstag der Anmeldung:
**18.06.2008   Patentblatt 2008/25**

(73) Patentinhaber: **Kathrein-Austria Ges.M.B.H.**
**6330 Kufstein (AT)**

(72) Erfinder: **MAYR, Ingo**
**A-6342 Niederndorf (AT)**

(74) Vertreter: **Flach, Dieter Rolf Paul**
**Andrae Flach Haug**
**Adlzreiterstrasse 11**
**83022 Rosenheim (DE)**

(56) Entgegenhaltungen:
**EP-A- 0 746 051     WO-A-2006/087024**
**JP-A- 10 290 131     US-A- 3 179 816**

**Beschreibung**

Die Erfindung betrifft eine Gleichspannungs- und/oder NF-Auskopplung aus einer HF-Strecke, insbesondere eine Gleichspannungs- und/oder NF-Umgehung aus einer HF-Strecke, vorzugsweise in Form von Hochfrequenzfiltern, Duplexern oder dergleichen nach dem Oberbegriff des Anspruches 1.

Insbesondere in der Empfangs- und Sendetechnik ist es häufig üblich auf einer Empfangs- und/oder Sendestrecke nicht nur die zu sendenden oder die zu empfangenden Hochfrequenzsignale (nachfolgend kurz HF-Signale genannt) weiterzuleiten, sondern über diese Strecke auch die in den zugeschalteten Antennen, Verstärkern, Vorverstärkern, etc. integrierten, aktiven Komponenten zusätzlich mit Gleichspannung zur Stromversorgung zu speisen und/oder über die Strecke zumindest auch niederfrequente (NF) Wechselspannungen (beispielsweise Pilottöne) zur Steuerung und Regelung der Komponenten mit zu übertragen.

Zusätzliche auf den Empfangs- oder Sendestrecken vorgesehene Geräte wie insbesondere Hochfrequenzfilter sind dabei jedoch häufig nicht in der Lage, beispielsweise neben den Hochfrequenzsignalen auch die für die Stromversorgung zusätzlich benötigte Gleichspannung und/oder niederfrequente Wechselspannung, beispielsweise für die erwähnten Pilottöne, durchzulassen und zu übertragen. Denn das Problem besteht darin, dass derartige Gleichspannungs- und/oder NF-Auskopplungen so ausgeführt sein müssen, dass sie die Eigenschaften des Filters möglichst nicht verändern. Dies wiederum funktioniert nur dann, wenn die Umgehungen zu den HF-Leitungen hin entkoppelt sind (was häufig unter Verwendung einer Spule oder einer λ/4-Leitung erfolgt) und auf der Auskoppelstrecke folglich nur extrem stark gedämpfte Hochfrequenzsignale übertragen werden können. Eine übliche Technik ist es von daher, eine Umgehung in Form einer Auskoppel- oder Bypass-Strecke vorzusehen, worüber eine auf der Hochfrequenzstrecke mit übertragene Gleichspannung bwz. eine niederfrequente Wechselspannung ausgekoppelt und an anderer Stelle wieder in die Hochfrequenzstrecke eingekoppelt werden kann. Dadurch wird beispielsweise eine mit einem Hochfrequenzfilter oder einem Duplexer versehene Hochfrequenz-Strecke umgangen bzw. überbrückt.

Hierfür waren bisher Lösungen bekannt, bei denen beispielsweise eine Spule bzw. eine λ/4-Leitung oder eine oder mehrere Leiterplatten mit mehrstufigen Tiefpassfiltern verwendet wurden, die meist diskret aufgebaut waren.

Aus Platzgründen ist aber auch bereits vorgeschlagen worden, eine λ/4-Leitung zusammen mit sogenannten Durchführungskondensatoren zu verwenden, bei denen auf der Bypass-Strecke im Einkoppel- bzw. im Auskoppelbereich der λ/4-Leitung ein die Leitung umgehendes Dielektrikum vorgesehen war, welches von einer zylindrischen Hülse unter Erzeugung des Kondensators ummantelt war, die in eine entsprechende Ausnehmung, beispielsweise in eine Gehäusewand eines Hochfrequenzfilters oder Duplexers, eingelötet werden musste. Mit dieser Technik waren aber diverse Nachteile verbunden.

Eine Ein- und Auskoppelschaltung für Gleichspannungs- und/oder Niederfrequenzsignale für HF-Strecken ist beispielsweise auch aus der US 5,296,825 A bekannt geworden. Diese Ein-/Auskoppelschaltung weist eine Auskoppelstrecke über einen Widerstand und einen damit in Reihe geschalteten Kondensator auf. Ferner umfasst die Auskoppelstrecke eine Transformationsleitung, deren elektrische Länge λ/4 ± Δ ist, wobei eine λ einer Wellenlänge auf der HF-Strecke entspricht. Die erwähnte Kondensator-Einrichtung ermöglicht einen Kurzschluss für eine bestimmte Frequenz.

Die Entkopplung kann aber nicht in jedem Fall als ausreichend bezeichnet werden.

Eine gattungsbildende Einrichtung zur Auskopplung einer Gleichspannung und/oder eines Niederfrequenz-Signals oder Signalstroms aus einer Hochfrequenzstrecke (auf der ein Hochfrequenz-Signal übertragend wird ) ist beispielsweise aus der EP-A-0 746 051 bekannt geworden. In einer koaxialen Übertragungsstrecke ist eine kapazitive Kopplung für den Innenleiter vorgesehen, und zwar unter Ausbildung einer Auskoppelstrecke, die eine Zweigleitung in Form einer Transformationsleitung umfasst.

Demgegenüber ist es Aufgabe der vorliegenden Erfindung, ausgehend von dem zuletzt genannten Stand der Technik, eine verbesserte Gleichspannungs- und/oder niederfrequente Umgehung für eine Hochfrequenzstrecke, insbesondere für Hochfrequenzfilter, Duplexer oder andere elektrische/elektronische Geräte zu schaffen, die einfach aufgebaut und in elektrischer Hinsicht hoch wirksam ist.

Die Erfindung wird entsprechend den im Anspruch 1 angegebenen Merkmalen gelöst. Vorteilhafte Ausgestaltungen der Erfindung sind in den Unteransprüchen angegeben.

Abgesehen von einer weiteren Kostenersparnis liegt der erfindungsgemäße Vorteil unter anderem darin, dass die entsprechende Gleichspannungs- und/oder niederfrequente Spannungs-Auskopplung und -Umgehung sehr viel leichter montiert oder auch im Falle von Reparaturarbeiten demontiert werden kann. Zudem können einfache Standardteile verwendet werden, die die Spezialanfertigung überflüssig machen. Schließlich ist auch der Platzaufwand gegenüber herkömmlichen Lösungen sehr viel geringer, da beispielsweise keine, sonst bisher notwendig gewordenen sogenannten Temperaturfallen im Gehäuse integriert sein müssen.

Weitere Vorteile, Einzelheiten und Merkmale der Erfindung ergeben sich nachfolgend aus den anhand von Zeichnungen dargestellten Ausführungsbeispielen. Dabei zeigen im einzelnen:

Figur 1 : Eine schematische Darstellung eines Duplexers mit zwei HF-Zweigen, in denen jeweils eine Bypass-Strecke für eine Gleichspannungs- und/oder niederfrequente Umgehung und -Auskopplung vorgesehen ist;

Figur 2 : eine schematische Axialschnittdarstellung durch ein erstes Ausführungsbeispiel für eine Umgehungsstrecke;

Figur 3 : eine Draufsicht auf das Ausführungsbeispiel gemäß Figur 2;

Figur 4 : eine räumliche Darstellung des Ausführungsbeispiels nach Figuren 2 und 3; und

Figur 5 : eine schematische Axialschnittdarstellung durch ein nicht zur Erfindung gehörendes Beispiel in Form lediglich einer Auskoppelstrecke.

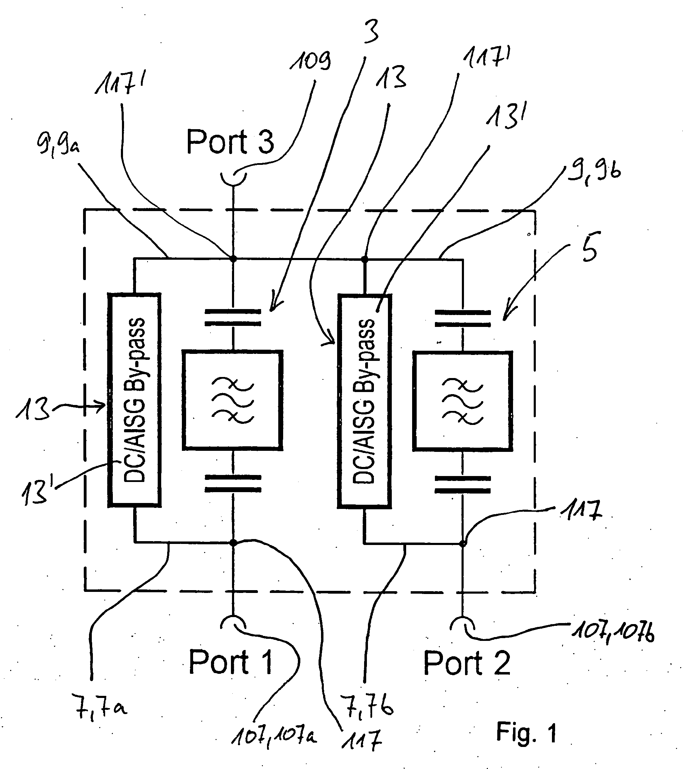

In Figur 1 ist in schematischer Darstellung ein Blockschaltbild für einen Duplexer gezeigt, der zwei Bandpässe 3 und 5 umfasst, beispielsweise einen ersten Bandpass von 806 MHz bis 960 MHz und beispielsweise einen zweiten Bandpass von 1.710 MHz bis 2.170 MHz.

Ein so gebildeter Duplexer weist also beispielsweise zwei eingangsseitige HF-Anschlüsse und/oder entsprechende Anschlussverbindungen 107, nämlich 107a und 107b, und einen die beiden Bandpass-Strecken zusammenführenden dritten ausgangsseitigen HF-Anschluss und/oder eine entsprechende Anschlussverbindung 109 auf, an dem üblicherweise eine Antenne angeschlossen ist. Im Falle eines entsprechenden Duplexers für eine Sende- oder Empfangsanlage würden die erwähnten eingangsseitigen HF-Anschlüsse 107a, 107b als Sendeeingänge und der dritte HF-Anschluss 109 als Sendeausgang dienen, wohingegen im Empfangsfalle der dritte HF-Anschluss 109 als Empfangseingang und die beiden weiteren Anschlüsse 107a und 107b als Empfangsausgänge bezeichnet werden könnten.

Aus dem schematischen Blockschaltbild ist ebenfalls zu ersehen, dass für jeden Bandpass 3 und 5 jeweils eine NF- und Gleichspannungsumgehung 13 vorgesehen ist, die nachfolgend kurz als Bypass- oder Umgehungs-Strecke bzw. teilweise auch als Auskoppel-Strecke 13 bezeichnet wird. Über diese Bypass- oder Auskoppel-Strecke 13 soll also zum einen eine Gleichspannungs-Versorgung für diverse Geräte, Verstärker etc. gewährleistet und/oder z.B. eine niederfrequente Signalübertragung, z.B. in Form von sogenannten Pilottönen, möglich sein, die zur Steuerung und Regelung einzelner Komponenten benötigt werden (beispielsweise auch bei der DiSEq-Technik).

Die Bypass- oder Auskoppelstrecke 13 umfasst dabei neben einer Auskoppel- oder Bypass-Schaltung 13' eingangsseitig eine Eingangsleitung 7, d.h. im gezeigten Ausführungsbeispiel eine Eingangsleitung 7a bzw. 7b, und ausgangsseitig eine Ausgangsleitung 9, d.h. im gezeigten Ausführungsbeispiel eine Ausgangsleitung 9a bzw. 9b. Dabei sind also die Eingangsleitungen 7 an einer Verbindungs- oder Verzweigungsstelle 117 mit der HF-Strecke 3 und die Ausgangsleitungen 9 an einer Verbindungsstelle 117' mit der betreffenden HF-Strecke 3 bzw. 5 elektrisch verbunden, im gezeigten Ausführungsbeispiel elektrisch-galvanisch.

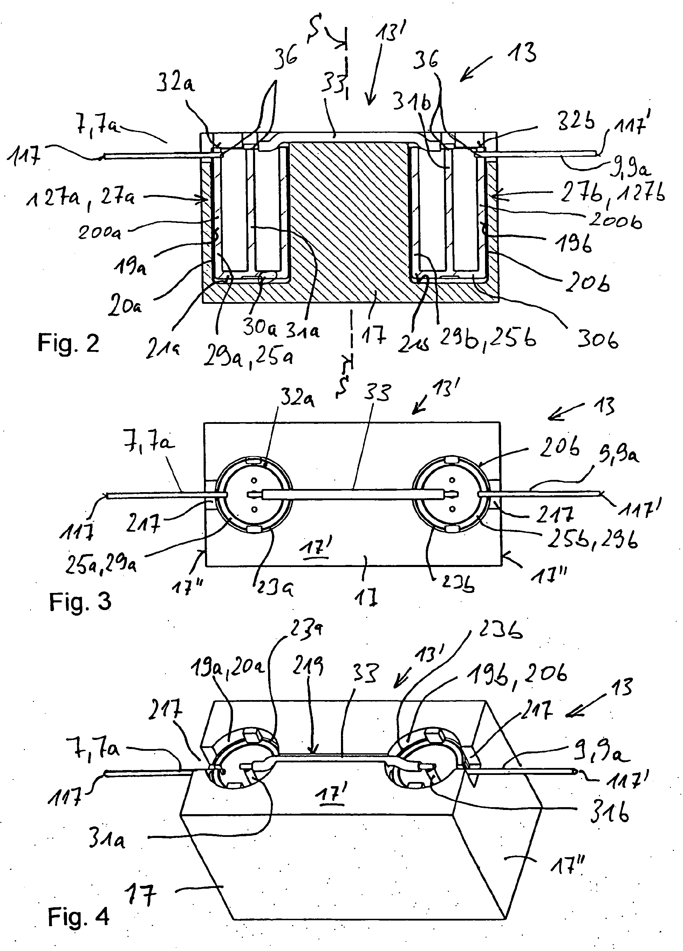

Anhand der Figuren 2 bis 4 ist eine derartige Bypass- oder Auskoppel-Strecke 13 im größeren Detail gezeigt.

Daraus ist zum einen zu ersehen, dass die Bypass-Strecke 13 ein Gehäuse 17 umfasst (welches auf Masse gelegt ist), welches aus elektrisch leitfähigem Material, üblicherweise einer entsprechenden Metalllegierung besteht oder aber zumindest eine leitfähige Außenhülle oder Überzug umfasst, wenn es beispielsweise aus Kunststoff hergestellt ist. Üblicherweise ist ein Gehäuse 17 vorgesehen, in welchem auch die Hochfrequenz-Strecke in Form des zumindest einen oder der mehreren Bandpässe 3, 5 mit realisiert ist. Im gezeigten Ausführungsbeispiel ist zur Vereinfachung und besseren Übersichtlichkeit nur ein Gehäuse 17 gezeigt, welches die Bypass-Strecke 13 und nicht auch die zusätzliche Hochfrequenz-Strecke beispielsweise unter Ausbildung eines Hochfrequenzfilters, Duplexers etc. mit umfasst.

Im gezeigten Ausführungsbeispiel sind also in das Gehäuse 17 von einer Seite her zwei hohlzylinderförmige Bohrungen oder Ausnehmungen 19a bzw. 19b eingebracht. Dadurch werden zwei hohlzylinderförmige Kondensatorwände gebildet, die quasi die ersten Platten, also die ersten Kondensatorhälften 20a und 20b eines nachfolgend noch im weiteren Detail beschriebenen Kondensators 27a bzw. 27b darstellen.

In dieser hohlzylinderförmigen Bohrung 19a bzw. 19b ist jeweils ein Dielektrikum 23a bzw. 23b eingefügt, beispielsweise in Form eines zylinderförmigen Dielektrikums, welches als ein Kunststoffspritzgussteil ausgebildet sein kann. Dieses ist vorzugsweise topfförmig gestaltet und kann bis zum unteren Boden 21a bzw. 21b in die hohlzylinderförmigen Bohrungen 19a bzw. 19b eingesetzt werden.

In dieses so gebildete Dielektrikum 23a, 23b wird dann ein elektrisch leitfähiger Hohlzylinder 25a bzw. 25b eingefügt, der die zweite Platte, also die zweite Kondensatorhälfte 200a bzw. 200b eines so gebildeten zylinderförmigen Kondensators 27a bzw. 27b bildet.

Im gezeigten Ausführungsbeispiel sind die innenliegenden zweiten Hälften der zylinderförmigen Kondensatoren 27a, 27b nicht als reine Hohlzylinder, sondern als Zylindertöpfe 29a bzw. 29b gestaltet, nämlich in koaxialer Bauweise mit einem jeweils zugehörigen Innenleiter 31a bzw. 31, die sich vom jeweiligen Topfboden 30a bzw. 30b erstrecken und im gezeigten Ausführungsbeispiel bis zum jeweiligen oberen Rand 32a bzw. 32b des zugehörigen Zylindertopfes 29a, 29b erstrecken.

Wie aus den Figuren 2 bis 4 zu ersehen ist, sind die Zylindertöpfe 29a, 29b, die mit Seitenversatz im Gehäuse 1 in entsprechenden Bohrungen 19a, 19b vorgesehen sind, gleich gestaltet. Beide Innenleiter 31a, 31b, also beide Zylindertöpfe 29a, 29b sind über eine, nachfolgend auch teilweise als Verbindungsleitung 33 bezeichnete Leitung 33 miteinander verbunden. Die Länge dieser Leitung kann beliebig sein.

Die Eingangsleitung 7, 7a bildet also eine eingangsseitige HF-Anschlussverbindung, die von einer Verbindungs- oder Abzweigstelle 117 von der in Figur 1 gezeigten HF-Strecke 3 abzweigt, und dabei zu dem Hohlzylinder 25a des ersten Zylindertopfes 29a führt und mit diesem elektrisch verbunden ist, vorzugsweise durch Weichlöten (die Stelle, an denen die Verbindung durch Weichlöten erfolgt, ist mit dem Bezugszeichen 36 versehen). Dazu ist die Eingangsleitung 7 bzw. der HF-Anschluss am oberen Rand 32a gegenüberliegend zum Topfboden 30a des Zylindertopfes 29a angelötet.

Die Eingangsleitung 7, 7a stellt dabei eine Transmissionsleitung dar, deren Länge bevorzugt λ/4 beträgt. Die Eingangsleitung 7a weist also vorzugsweise eine Länge auf, die der mittleren Wellenlänge eines auf der zugehörigen HF-Strecke zu übertragenden Frequenzbandes entspricht. Zumindest wird λ so gewählt, dass der Wert hierfür einer Wellenlänge für eine Frequenz entspricht, die innerhalb des auf der Hochfrequenzstrecke zu übertragenden Frequenzbandes liegt.

Ebenso ist eine den ausgangsseitigen HF-Anschluss, also die ausgangsseitige HF-Anschlussverbindung 9 darstellende Ausgangsleitung 9' wiederum am oberen Rand 29b des Zylindertopfes 29b angelötet (vorzugsweise ebenfalls wieder durch Weichlöten 36), die am gegenüberliegenden Ende des Zylindertopfes 29b an einer Verbindungsstelle 117' mit der zugehörigen HF-Strecke 3 bzw. 5 verbunden ist. Auch diese HF-Anschlussverbindung 9 bzw. die entsprechende Ausgangsleitung 9 weist dabei eine Länge auf, die λ/4 entspricht, wobei λ vorzugsweise wiederum der mittleren Wellenlänge des Frequenzbandes entspricht, welches auf der zugehörigen HF-Strecke übertragen werden soll. Zumindest soll λ so gewählt werden, dass der Wert hierfür einer Wellenlänge für eine Frequenz entspricht, die innerhalb eines auf der HF-Strecke zu übertragenden Frequenzbandes liegt.

Im gezeigten Ausführungsbeispiel ist zu ersehen, dass an dem Gehäuse 17 an der nach oben weisenden Gehäusewand 17' jeweils eine, zu den stirnseitig gegenüberliegenden Begrenzungsabschnitten 17" des Gehäuses 17 Ausnehmung 217 vorgesehen ist, durch die die Eingangs- bzw. die Ausgangsleitung 7, 9 vom oberen Rand 32a bzw. 32b der beiden Zylindertöpfe 29a und 29b, die als Sperrtöpfe 127a und 127b ausgebildet sind, heraus geführt werden kann, beispielsweise parallel zur oberen Begrenzungswand 17' des Gehäuses 17. Denn auch die Axialbohrungen 19a und 19b sind in dem Gehäuse 17 so tief eingebracht, dass die Sperrtöpfe 127a, 127b in voller Axiallänge in diese Bohrungen eintauchen und mit ihrem oberen Rand 32a bzw. 32b die obere Begrenzungswand 17' des Gehäuses nach oben hin nicht überragen. Somit könnte auch die Eingangs- und die Ausgangsleitung 7 bzw. 9 unterhalb der oberen Ebene der Begrenzungswand 17' des Gehäuses seitlich herausgeführt werden. Schließlich ist insbesondere auch aus den Figuren 2 und 4 zu ersehen, dass die Verbindungsleitung 33 in einer Gehäuseausnehmung 219 (Figur 4), die schlitzförmig die beiden zylinderförmigen Bohrungen 19a und 19b im Bereich der oberen Begrenzungswand 17' des Gehäuses 17 verbindet, verlegt ist, so dass auch diese Leitung 33 nicht über die obere Begrenzungsebene 17' des Gehäuses übersteht. Die zuletzt genannten Maßnahmen können aber auch davon abweichend gestaltet sein.

Durch eine so gebildete Bypass-Leitung oder -Umgehung 13 kann also parallel zu einer Hochfrequenz-Strecke (beispielsweise Bandpass-Strecke 3, 5 in Figur 1) eine Gleichspannung zur Stromversorgung und/oder eine niederfrequente (NF) Wechselspannung (beispielsweise Pilottöne) übertragen werden. Dabei bildet die hohle zylinderförmige Kondensatorwand 20a bzw. 20b beispielsweise die jeweils erste "Platte" eines so gebildeten Kondensators 27a bzw. 27b. Die zweite "Platte" des Kondensators wird durch den in die hohlzylinderförmigen Bohrungen 19a, 19b eingefügten, elektrisch leitfähigen Hohlzylinder 25a bzw. 25b gebildet, wobei beide "Platten" durch das erwähnte Dielektrikum 23a, 23b elektrisch galvanisch voneinander getrennt sind.

Dabei kann das Dielektrikum 23a, 23b wie aber auch der jeweils darin eingefügte, nach Art eines Zylindertopfes 29a, 29b gestaltete Hohlzylinder 25a, 25b so ausgebildet sein, dass sie in die hohlzylinderförmige Bohrung 19 unter Erzeugung einer Schnapp- und/oder Rastwirkung eingefügt werden können. Entsprechende Schnapp- und/oder Rasteinrichtungen oder zumindest ausreichende Klemmmaßnahmen oder -einrichtungen können also an dem vorzugsweise aus Kunststoff bestehenden Dielektrikum 23a, 23b im Zusammenspiel mit der entsprechenden Ausnehmung im Gehäuse vorgesehen und/oder ausgebildet sein.

Die erwähnten Kondensatoren 27a, 27b bilden einen Tiefpass unter Erzeugung eines hochfrequenzmäßigen Kurzschlusses mit dem leitfähigen Gehäuse 17, was üblicherweise auf Masse liegt. Gleichwohl sind die so erwähnten, hochfrequenzmäßig als Kurzschluss wirkenden Kondensatoren 27a, 27b für eine optimale Entkopplung gegenüber dem HF-Zweig noch nicht ausreichend, da immer noch ein zu großes Restsignal oder eine zu große Restsignalintensität über diese Bypass-Strecke übertragen werden würde. Um die Auskopplung weiter zu verbessern, ist entsprechend dem geschilderten Ausführungsbeispiel in die Kondensatoren 27a, 27b jeweils ein Sperrtopf 127a, 127b integriert. Dieser Sperrtopf 127a, 127b wird jeweils durch den Zylindertopf 29a, 29b mit dem zugehörigen, konzentrisch angeordneten Innenleiter 31a, 31b gebildet, der mit dem jeweiligen Boden 30a, 30b des betreffenden Zylindertopfes 29a, 29b verbunden ist. Die Anschlussleitung 7 bzw. 9 wird dann also direkt an diesem Sperrtopf 127a bzw. 127b angeschlossen und erfüllt damit die Entkopplung.

Die axiale Länge (vor allem die axiale Länge im Inneren des Zylindertopfes und somit die axiale Länge des Innenleiters 31a, 31b) ist dabei bevorzugt üblicherweise proportional zu $1/\sqrt{\epsilon_R}$ sowie dem weiteren Faktor $\lambda/4$, wobei $\epsilon_R$ die entsprechende Dielektrizitätskonstante des verwendeten Innendielektrikums ist, welches im gezeigten Ausführungsbeispiel bevorzugt aus Luft besteht aber nicht aus Luft bestehen muss. Es kann auch hier ein anderes Dielektrikum eingefügt sein. $\lambda$ stellt dabei bevorzugt die mittlere Wellenlänge des in dem HF-Zweig zu übertragenden Frequenzbandes dar. Durch die Verwendung des so gebildeten Sperrtopfs 127a, 127b wird jeweils über den so gebildeten Kondensator 27a, 27b ein Kurzschluss im Bodenbereich 20a, 20b des Sperrtopfes erzeugt, wobei dieser Kurzschluss an das offene Ende des Sperrtopfes 127a, 127b in einen Leerlauf transferiert wird ($\lambda/4$ elektrische Länge). Allerdings muss die axiale Länge der Sperrtöpfe bzw. des Innenleiters der Sperrtöpfe nicht zwingend $\lambda/4$ sein, sondern kann davon auch abweichen und völlig andere Werte aufweisen. Entscheidungserheblicher ist die Länge der Eingangsleitung 7, 7a bzw. 7b wie aber auch die Länge der Ausgangsleitung 9, d.h. im gezeigten Ausführungsbeispiel nach Figur 1 der Ausgangsleitung 9a bzw. 9b.

Durch den gezeigten Aufbau ist also gewährleistet, dass beispielsweise der Kurzschluss am ersten Sperrtopf 127a, also der Kurzschluss an der Verbindungsstelle der sog. $\lambda/4$-Eingangsleitung mit dem Sperrtopf 127a (an der Weichlötstelle 36) in einen Leerlauf an der Verbindungsstelle 117 zur HF-Strecke 3 transformiert wird, so dass hierdurch das HF-Filter durch die Auskopplungs- bzw. Umgehungsstrecke keine Beeinflussung oder Veränderung erfährt. Das Gleiche gilt für die zweite $\lambda/4$-Anschlussleitung 9, bei welcher ebenfalls der Kurzschluss am Sperrtopf 127a (also an der Verbindungsstelle der $\lambda/4$-Leitung 9 zum Sperrtopf 127b in einen Leerlauf an der Verbindungsstelle 117' zur HF-Strecke transformiert wird, so dass auch hier der dortige HF-Zweig durch die Auskopplungs- bzw. Umgehungsstrecke keine nachteilige Beeinflussung erfährt.

Da im geschilderten Ausführungsbeispiel gemäß Figur 1 und den Figuren 2 bis 4 eine Gleichspannungs- und/oder HF-Umgehung beschrieben worden ist, also noch eine zweite Verbindungsstelle 117' mit dem zugehörigen HF-Zweig vorgesehen ist, ist die Ausbildung im gezeigten Ausführungsbeispiel symmetrisch aufgebaut. Die erste der beiden symmetrischen Hälften gemäß dem Ausführungsbeispiel nach den Figuren 2 bis 4 besteht aus einer Auskoppel-Strecke, nämlich im gezeigten Ausführungsbeispiel von der Verbindungsstelle 117 ausgehend in Form der nachfolgenden $\lambda/4$-Leitung 7, die zum Zylindertopf 29a führt, also zum Sperrtopf 127a. Die zweite Hälfte des symmetrischen Aufbaus geht von einer Verbindungsstelle 117' von der HF-Strecke aus, und zwar über eine nachgeordnete $\lambda/4$-Leitung 9, 9a, die zu dem nachgeordneten Zylindertopf 29b, also zum Sperrtopf 127b führt. Beide Sperrtöpfe sind dann über die erwähnte Leitung 33 miteinander verbunden. Der im Prinzip symmetrische Aufbau, zumindest in funktioneller Hinsicht, ist bezüglich der Symmetrieebene S in Figur 2 angedeutet.

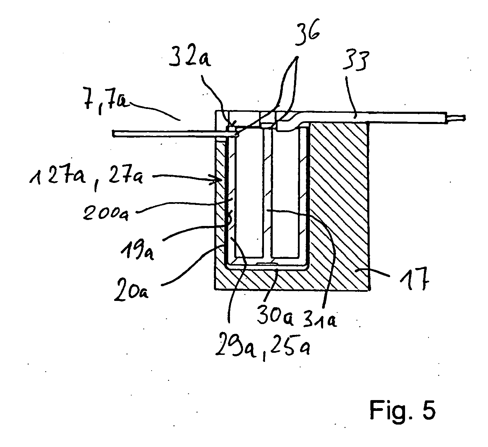

Sollte allerdings keine Umgehungsstrecke (bei der eine Ankopplung zur HF-Strecke an beiden gegenüberliegenden Enden 117 bzw. 117' vorgesehen ist) sondern lediglich eine Auskoppelstrecke realisiert werden, die nur über eine Verzweigungsstelle 117 (oder 117') mit der HF-Strecke verbunden ist und von dieser weg führt, so wäre es ausreichend, wenn nach der Verzweigungsstelle 117 und der Transformationsleitung, d.h. der $\lambda/4$-Eingangsleitung 7 zunächst ein hochfrequenzmäßiger Kurzschluss in Form eines ersten Kondensators 27a in Form des erwähnten Sperrtopfes 127a folgen würde, so dass dann am freien Ende des Innenleiters 31a eine Leitung 33 angeschlossen werden könnte, in der ein Gleichspannungs- und/oder Niederfrequenz-Signal abgegriffen werden kann. Mit anderen Worten wäre nur die halbe Vorrichtung notwendig, wie sie schematisch in Figur 5 wiedergegeben ist.

In dem in den Figuren 1 bis 4 gezeigten Ausführungsbeispiel handelt es sich aber nicht um eine Auskoppelstrecke, sondern um eine Umgehungs- oder Bypass-Strecke 13, die an beiden Anschlüssen 7 und 9 eine Verbindung zur HF-Strecke 3 bzw. 5 aufweist, weshalb der Aufbau symmetrisch ist, so dass von jeder Seite der beiden Verbindungsstellen 117, 117' aus betrachtet zunächst eine erste $\lambda/4$-Leitung 7' bzw. 9' und ein Sperrtopf 127a, 127b nachgeschaltet ist. Dabei bildet jeder Kurzschlusskondensator 27a, 27b gleichzeitig auch den erläuterten Sperrtopf.

In den gezeigten Ausführungsbeispielen ist stets von einer $\lambda/4$-Leitung 7 bzw. 9 gesprochen worden, wobei $\lambda$ einer Frequenz innerhalb eines Frequenzbandes entsprechen sollte, welches auf den parallelen Hochfrequenzzweig übertragen wird. Vorzugsweise sollte $\lambda$ der mittleren Wellenlänge des entsprechenden, auf dem Hochfrequenzzweig übertragenen Bandes entsprechen. Die erfindungsgemäßen Vorteile lassen sich in ausreichendem Maße aber auch noch dann erzielen, wenn die Länge der Verbindungsleitung 7 bzw. 9 nicht exakt $\lambda/4$ beträgt, sondern davon abweicht.

Ein Bereich von $\lambda/8$ bis $3\lambda/8$ und insbesondere ein Bereich von bevorzugt $3\lambda/16$ bis $5\lambda/16$ führt in der Regel immer noch zu ausreichenden Ergebnissen. Dabei kann die elektrische Länge L für die in Rede stehende Transformationsleitung allgemein wie folgt beschrieben werden:

$$\texttt{L = } \lambda\texttt{/4} \pm \texttt{ < } \lambda\texttt{/8 (d.h. } \lambda\texttt{/8 < L < 3}\lambda\texttt{/8)}$$

und insbesondere

$$L = \lambda/4 \pm < \lambda/16 \text{ (d.h. } 3\lambda/16 < L < 5\lambda/16)$$

wobei λ ist dabei wiederum bevorzugt die mittlere Wellenlänge des in der HF-Strecke zu übertragenden Frequenzbandes oder zumindest eine Wellenlänge innerhalb dieses HF-Frequenzbandes ist.

Im Prinzip kann die oben genannte Länge dieser Transformationsstrecke 7 bzw. 9 aber auch um λ/2 verlängert werden, um zu, den gleichen Ergebnissen zu kommen. Die elektrische Länge der Transformationsleitung 7 bzw. 9 kann also allgemein wie folgt umschrieben werden:

$$L = \lambda/4 + n \; \lambda/2 \pm < \lambda/8$$

wobei die vorstehende Formel auch geschrieben werden kann als

$$\lambda/8 + n \cdot \lambda/2 < L < 3\lambda/8 + n \cdot \lambda/2$$

und insbesondere

$$L = \lambda/4 + n \; \lambda/2 \pm < \lambda/16,$$

wobei die vorstehende Formel auch geschrieben werden kann als

$$3\lambda/16 + n \cdot \lambda/2 < L < 5\lambda/16 + n \cdot \lambda/2$$

wobei die elektrische Länge vorzugsweise

$$L = \lambda/4 + n \; \lambda/2$$

ist.

"n" ist dabei eine natürliche ganze Zahl einschließlich 0, also beispielsweise n = 0, 1, 2, 3 usw., wobei λ wiederum eine Wellenlänge und vorzugsweise die mittlere Wellenlänge des auf dem Hochfrequenzpfad übertragenen Hochfrequenzbandes ist.

Schließlich wird auch noch darauf hingewiesen, dass die Verbindungsleitungen 7 bzw. 9, die teilweise auch als Eingangs- oder Ausgangsleitungen 7 bzw. 9 bezeichnet wurden, nicht zwingend gerade verlaufen müssen, sondern beispielsweise auch bogenförmig oder insbesondere in Form einer Spule ausgebildet sein können. Auch hier soll die Länge der Spule, also des verwendeten Drahtes für die Spule, bevorzugt die vorstehend genannten Werte aufweisen.

**Patentansprüche**

1. Gleichspannungs- und/oder Niederfrequenz-Auskopplung für HF-Strecken, insbesondere HF-Geräte wie Hochfrequenzfilter, Duplexer, mit folgenden Merkmalen

      - es ist ein elektrisch leitfähiges Gehäuse (17) mit einem Masseanschluss vorgesehen,
      - von einer Verbindungsstelle (117, 117') auf einer HF-Strecke (3, 5) ist eine Auskoppelstrecke (13) abgezweigt,
      - die Auskoppelstrecke (13) umfasst von der Verbindungsstelle (117, 117') ausgehend eine Zweigleitung (7, 9) in Form einer Transformationsleitung, für deren elektrische Länge gilt

$$\lambda/8 + n \cdot \lambda/2 < L < 3\lambda/8 + n \cdot \lambda/2$$

wobei $\lambda$ eine Wellenlänge darstellt, die einer Wellenlänge innerhalb des auf der HF-Strecke (3, 5) zu übertragenden HF-Bandes entspricht und n eine der folgenden Zahlen darstellt n = 0, 1, 2, 3 usw.,

- mit einer sich an die Zweigleitung (7, 9) anschließenden Kondensator-Einrichtung (27a, 27b) in Form eines Tiefpasses und/oder eines HF-Kurzschlusses, und
- auf der Auskoppelstrecke (13) ist neben der zumindest einen Kondensator-Einrichtung (27a, 27b) ferner zumindest ein Sperrtopf (127a, 127b) vorgesehen,
**gekennzeichnet durch** das folgende weitere Merkmal
- die Auskoppel-Strecke (13) ist als Bypass- oder Umgehungs-Strecke (13) ausgebildet, die zwischen zwei Verbindungsstellen (117, 117') auf der HF-Strecke (3, 5) parallel zu dieser verläuft,-und zwar derart, dass von der einen Verbindungsstelle (117) zur nächsten eine Zweigleitung (7) zu einem nachgeschalteten Kondensator (27a) mit einem Sperrtopf (29a) führt, wohingegen von der zweiten Verbindungsstelle (117') eine weitere Zweigleitung (9) ebenfalls zu einem weiteren Kondensator (27b) mit einem weiteren Sperrtopf (127b) führt, wobei beide Sperrtöpfe (127a, 127b) jeweils einen Innenleiter (31a, 31b) umfassen, die über eine Verbindungsleitung (33) miteinander verbunden sind.

2.  Gleichspannungs- und/oder Niederfrequenz-Auskopplung nach Anspruch 1, **dadurch gekennzeichnet, dass** der Aufbau zumindest in funktioneller Hinsicht symmetrisch so ausgestaltet ist, dass sich auf der Bypass- oder Umgehungsstrecke (13) an die beiden Verbindungsstellen (117, 117') zunächst zwei in elektrischer Hinsicht gleich lange Zweigleitungen (7, 9) anschließen, an deren freien Enden dann jeweils einer der beiden Sperrtöpfe (127a, 127b) angeschlossen ist, deren Innenleiter (31a, 31b) über die Verbindungsleitung (33) miteinander verbunden sind.

3.  Gleichspannungs- und/oder Niederfrequenz-Auskopplung nach Anspruch 2, **dadurch gekennzeichnet, dass** der Sperrtopf (127a, 127b) in einer zylindrischen Bohrung (19a, 19b) im Gehäuse (17) angeordnet ist, wobei die Wandung der zylindrischen Bohrung (19a, 19b) im Gehäuse (17) eine erste Kondensatorhälfte (20a, 20b) und der Außenmantel des Sperrtopfes (29a, 29b) eine zweite Kondensatorhälfte (200a, 200b) der Kondensator-Einrichtung (27a, 27b) bilden.

4.  Gleichspannungs- und/oder Niederfrequenz-Auskopplung nach Anspruch 3, **gekennzeichnet durch** die folgenden Merkmale

- die Kondensator-Einrichtung (27a, 27b) besteht aus einem zylinderförmigen Kondensator,
- der zylinderförmige Kondensator umfasst eine hohlzylinderförmige Bohrung (19) in dem Gehäuse (17),
- die hohlzylinderförmige Gehäusewandung bildet die eine elektrische Fläche oder erste Kondensatorhälfte (20a, 20b) des Kondensators (27a, 27b),
- innerhalb dieser ersten zylinderförmigen Kondensatorhälfte (20a, 20b) ist ein elektrisch leitfähiger Hohlzylinder (25a, 25b) eingesetzt, der die jeweils zweite Kondensatorhälfte (200a, 200b) darstellt und somit den Kondensator (27a, 27b) bildet,
- zwischen den jeweils ersten und zweiten Kondensatorhälften (20a, 20b; 200a, 200b) ist ein vorzugsweise zylinderförmiges Dielektrikum eingefügt,
- der Hohlzylinder (25a, 25b) ist als Zylindertopf (29a, 29b) ausgebildet, und
- jeder Zylindertopf (29a, 29b) bildet einen Sperrtopf (127a, 127b) mit jeweils einem koaxialen Innenleiter (31a, 31b), der mit dem zugehörigen Topfboden (30a, 30b) des Zylindertopfes (29a, 29b) elektrisch verbunden ist.

5.  Gleichspannungs- und/oder Niederfrequenz-Auskopplung nach einem der Ansprüche 1 bis 4, **dadurch gekennzeichnet, dass** die die beiden Innenleiter (31a, 31b) verbindende Verbindungsleitung (33) an dem oberen Ende des jeweiligen Innenleiters (31a, 31b) gegenüberliegend zum Topfboden (30a, 30b) elektrisch angeschlossen ist.

6.  Gleichspannungs- und/oder Niederfrequenz-Auskopplung nach Anspruch 5, **dadurch gekennzeichnet, dass** die Verbindungsleitung (33) an ihren Enden an den Innenleitern (31a, 31b) mittels Weichlötung angeschlossen ist.

7.  Gleichspannungs- und/oder Niederfrequenz-Auskopplung nach einem der Ansprüche 3 bis 6, **dadurch gekenn-**

**zeichnet, dass** die beiden Zweigleitungen (7, 9) jeweils mit der zweiten Kondensatorhälfte (200a, 200b) verbunden sind.

8. Gleichspannungs- und/oder Niederfrequenz-Auskopplung nach Anspruch 4, **dadurch gekennzeichnet, dass** die Zweigleitungen (7, 9) am oberen Rand (32a, 32b) gegenüberliegend zum Topfboden (30a, 30b) am zugehörigen Sperrtopf (127a, 127b) angeschlossen sind, vorzugsweise durch Weichlötung (36).

9. Gleichspannungs- und/oder Niederfrequenz-Auskopplung nach einem der Ansprüche 4 bis 8, **dadurch gekennzeichnet, dass** die axiale Höhe oder Länge des koaxialen Innenleiters (31a, 31b) und damit das Innenmaß des Zylindertopfes (29a, 29b) bzw. des Sperrtopfes (127a, 127b) $\lambda/4$ entspricht, wobei $\lambda$ eine Wellenlänge ist, die zu einem auf der HF-Strecke (3, 5) zu übertragenden Frequenzband gehört, und vorzugsweise eine mittlere Wellenlänge des auf dem HF-Zweig (3, 5) zu übertragenden Frequenzbandes darstellt.

10. Gleichspannungs- und/oder Niederfrequenz-Auskopplung nach einem der Ansprüche 1 bis 9; **dadurch gekennzeichnet, dass** im Gehäuse (17) in Höhe des oberen Randes (32a, 32b) des Sperrtopfes (127a, 127b) eine Gehäuseausnehmung (217) vorgesehen ist, durch welche hindurch die Zweigleitung (7, 9) verlegt ist.

11. Gleichspannungs- und/oder Niederfrequenz-Auskopplung nach einem der Ansprüche 1 bis 10, **dadurch gekennzeichnet, dass** die Zweigleitung (7, 9) eine elektrische Länge

$$3\lambda/16 + n \cdot \lambda/2 < L < 5\lambda/16 + n \cdot \lambda/2$$

aufweist, wobei $\lambda$ eine Wellenlänge des in der HF-Strecke zu übertragenden Frequenzbandes darstellt, vorzugsweise die mittlere Wellenlänge und n eine natürliche Zahl einschließlich 0 ist (n = 0, 1, 2, 3 usw.).

12. Gleichspannungs- und/oder Niederfrequenz-Auskopplung nach einem der Ansprüche 1 bis 11, **dadurch gekennzeichnet, dass** die Zweigleitung (7, 9) eine Länge $L = \lambda/4$ aufweist, wobei $\lambda$ eine Wellenlänge des in der HF-Strecke zu übertragenden Frequenzbandes darstellt, vorzugsweise die mittlere Wellenlänge der in dem HF-Band zu übertragenden mittleren Frequenz.

13. Gleichspannungs- und/oder Niederfrequenz-Auskopplung nach einem der Ansprüche 1 bis 12, **dadurch gekennzeichnet, dass** die Zweigleitung (7, 9) gerade verläuft.

14. Gleichspannungs- und/oder Niederfrequenz-Auskopplung nach einem der Ansprüche 1 bis 12, **dadurch gekennzeichnet, dass** die Zweigleitung (7, 9) gekrümmt verläuft, vorzugsweise in Form einer Spule.

**Claims**

1. A direct voltage and/or audio-frequency output for RF paths, in particular RF apparatuses such as radio frequency filters, duplexers, having the following features

    - an electrically conductive housing (17) with an earth connection (lacuna) is provided,
    - an output path (13) branches from a connecting point (117, 117') on an RF path (3, 5),
    - the output path (13) comprises, proceeding from the connecting point (117, 117'), a branch line (7, 9) in the form of a transformation line, for the electrical length of which

$$\lambda/8 + n \cdot \lambda/2 < L < 3\lambda/8 + n \cdot \lambda/2,$$

    applies, wherein $\lambda$ represents a wavelength, which corresponds to a wavelength inside the RF band to be transmitted on the RF path (3, 5) and n represents one of the following numbers n = 0, 1, 2, 3 etc.,
    - having a capacitor device (27a, 27b) adjoining the branch line (7, 9), in the form of a low-pass filter and/or an RF short,
    and

- at least one blocking pot (127a, 127b) is further provided on the output path (13) and in addition to the at least one capacitor device (27a, 27b),

**characterized by** the following further feature

- the output path (13) is formed as a bypass or circumvention path (13), which runs between two connecting points (117, 117') on the RF path (3, 5) parallel thereto, specifically such that, from one connecting point (117) to the next, a branch line (7) leads to a downstream capacitor (27a) with a blocking pot (29a), whereas, from the second connecting point (117'), a further branch line (9) also leads to a further capacitor (27b) with a further blocking pot (127b), the two blocking pots (127a, 127b) in each case comprising an inner conductor (31 a, 31 b), which are connected to one another by means of a connecting line (33).

2.  The direct voltage and/or audio-frequency output as claimed in claim 1, wherein the structure, at least in the functional respect, is configured symmetrically in such a way that two branch lines (7, 9), which are of the same length from the electrical point of view are firstly connected on the bypass or circumvention path (13) at the two connecting points (117, 117'), one of the two blocking pots (127a, 127b) then being connected in each case at the free ends of said branch lines, the inner conductors (31 a, 31 b) of said blocking pots being connected to one another by means of the connecting line (33).

3.  The direct voltage and/or audio-frequency output as claimed in claim 2, wherein the blocking pot (127a, 127b) is arranged in a cylindrical bore (19a, 19b) in the housing (17), the wall of the cylindrical bore (19a, 19b) in the housing (17) forming a first capacitor half (20a, 20b) and the outer surface of the blocking pot (29a, 29b) forming a second capacitor half (200a, 200b) of the capacitor device (27a, 27b).

4.  The direct voltage and/or audio-frequency output as claimed in claim 3, **characterised by** the following features

- the capacitor device (27a, 27b) consists of a cylindrical capacitor,
- the cylindrical capacitor comprises a hollow cylindrical bore (19) in the housing (17),
- the hollow cylindrical housing wall forms one electrical face or first capacitor half (20a, 20b) of the capacitor (27a, 27b),
- inserted inside this first cylindrical capacitor half (20a, 20b) is an electrically conductive hollow cylinder (25a, 25b), which is the respective second capacitor half (200a, 200b) and therefore forms the capacitor (27a, 27b),
- a preferably cylindrical dielectric is inserted between the respective first and second capacitor halves (20a, 20b; 200a, 200b),
- the hollow cylinder (25a, 25b) is configured as a cylindrical pot (29a, 29b) and
- each cylindrical pot (29a, 29b) forms a blocking pot (127a, 127b) with a coaxial inner conductor (31 a, 31 b) in each case, which is electrically connected to the associated pot base (30a, 30b) of the cylinder pot (29a, 29b).

5.  The direct voltage and/or audio-frequency output as claimed in any one of claims 1 to 4, wherein the connecting line (33) connecting the two inner conductors (31 a, 31 b) is connected to the upper end of the respective inner conductor (31 a, 31 b) opposing the pot base (30a, 30b).

6.  The direct voltage and/or audio-frequency output as claimed in claim 5, wherein the connecting line (33) is connected at its ends to the inner conductors (31 a, 31 b) by means of soft soldering.

7.  The direct voltage and/or audio-frequency output as claimed in any one of claims 3 to 6, wherein the two branch lines (7, 9) are in each case connected to the second capacitor half (200a, 200b).

8.  The direct voltage and/or audio-frequency output as claimed in claim 4, wherein the branch lines (7, 9) are connected at the upper edge (32a, 32b) opposing the pot base (30a, 30b) to the associated blocking pot (127a, 127b), preferably by soft welding (36).

9.  The direct voltage and/or audio-frequency output as claimed in any one of claims 4 to 8, wherein the axial height or length of the coaxial inner conductor (31 a, 31 b) and therefore the inner dimension of the cylindrical pot (29a, 29b) or the blocking pot (127a, 127b) corresponds to $\lambda/4$, wherein $\lambda$ is a wavelength which belongs to a frequency band to be transmitted on the RF path (3, 5), and is preferably a medium wavelength of the frequency band to be transmitted on the RF branch (3, 5).

**10.** The direct voltage and/or audio-frequency output as claimed in any one of claims 1 to 9, wherein a housing recess (217), through which the branch line (7, 9) is laid, is provided in the housing (17) at the level of the upper edge (32a, 32b) of the blocking pot (127a, 127b).

**11.** The direct voltage and/or audio-frequency output as claimed in any one of claims 1 to 10, wherein the branch line (7, 9) has an electrical length

$$3\lambda/16 + n \cdot \lambda/2 < L < 5\lambda/16 + n \cdot \lambda/2$$

wherein $\lambda$ is a wavelength of the frequency band to be transmitted in the RF path, preferably the medium wavelength and n is a natural number including 0 (n = 0, 1, 2, 3 etc.).

**12.** The direct voltage and/or audio-frequency output as claimed in any one of claims 1 to 11, wherein the branch line (7, 9) has a length L = $\lambda/4$, wherein, $\lambda$ is a wavelength of the frequency band to be transmitted in the RF path, preferably the medium wavelength of the medium frequency to be transmitted in the RF band.

**13.** The direct voltage and/or audio-frequency output as claimed in any one of claims 1 to 12, wherein the branch line (7, 9) runs in a straight line.

**14.** The direct voltage and/or audio-frequency output as claimed in any one of claims 1 to 12, wherein the branch line (7, 9) runs in a curved manner preferably in the form of a coil.

**Revendications**

**1.** Découplage à tension continue et/ou à basse fréquence pour des voies à haute fréquence, en particulier des appareils à haute fréquence comme des filtres à haute fréquence, des duplexeurs, avec les éléments suivants

   - il est prévu un boîtier électriquement conducteur (17) avec un raccordement à la masse,
   - une voie de découplage (13) est ramifiée depuis un emplacement de jonction (117, 117') sur une voie à haute fréquence (3, 5),
   - la voie de découplage (13) comprend, partant de l'emplacement de jonction (117, 117'), une ligne ramifiée (7, 9) sous la forme d'une ligne de transformation, dont la longueur électrique obéit aux relations

$$\lambda/8 + n \cdot \lambda/2 < L < 3\lambda/8 + n \cdot \lambda/2$$

dans lesquelles $\lambda$ représente une longueur d'onde qui correspond à une longueur d'onde à l'intérieur de la gamme HF à transmettre sur la voie à haute fréquence (3, 5), et n représente l'un des nombres suivants n = 0, 1, 2, 3, etc.,

   - comprenant un système à condensateur (27a, 27b) qui se raccorde à la ligne ramifiée (7, 9) sous la forme d'un filtre passe-bas et/ou d'un court-circuit HF, et
   - sur la voie de découplage (13), outre ledit au moins un système à condensateur (27a, 27b), il est prévu au moins un pot de blocage (127a, 127b),

**caractérisé par** la caractéristique suivante

   - la voie de découplage (13) est réalisée sous forme de voie de by-pass ou de contournement (13), qui s'étend entre deux emplacements de jonction (117, 117') sur la voie à haute fréquence (3, 5) parallèlement à celle-ci, et cela de telle manière que depuis un emplacement de jonction (117) au suivant, une ligne ramifiée (7) mène à un condensateur (27a) branché en aval avec un pot de blocage (29a), alors qu'au contraire, depuis le second emplacement de jonction (117') une autre ligne ramifiée (9) mène également à un autre condensateur (27b) avec un autre pot de blocage (127b), et les deux pots de blocage (127a, 127b) comprennent chacun un conducteur intérieur (31a, 31 b), lesquels sont reliés ensemble via une ligne de liaison (33).

**2.** Découplage à tension continue et/ou à basse fréquence selon la revendication 1, **caractérisé en ce que** la structure est réalisée symétrique, au moins du point de vue fonctionnel, de telle façon que, sur la voie de by-pass ou de contournement (13) et au niveau des deux emplacements de jonction (117, 117'), se raccordent tout d'abord deux lignes ramifiées (7, 9) de même longueur du point de vue électrique, aux extrémités libres desquelles sont raccordés respectivement l'un des deux pots de blocage (127a, 127b), dont les conducteurs intérieurs (31a, 31b) sont reliés l'un à l'autre via la ligne de jonction (33).

**3.** Découplage à tension continue et/ou à basse fréquence selon la revendication 2, **caractérisé en ce que** le pot de blocage (127a, 127b) est agencé dans un perçage cylindrique (19a, 19b) dans le boîtier (17), et la paroi du perçage cylindrique (19a, 19b) dans le boîtier (17) forme une première moitié de condensateur (20a, 20b) et l'enveloppe extérieure du pot de blocage (29a, 29b) forme une deuxième moitié de condensateur (200a, 200b) du système à condensateur (27a, 27b).

**4.** Découplage à tension continue et/ou à basse fréquence selon la revendication 3, **caractérisé par** les caractéristiques suivantes

- le système à condensateur (27a, 27b) est constitué par un condensateur de forme cylindrique,
- le condensateur de forme cylindrique comprend un perçage (19) de forme cylindrique creuse dans le boîtier (17),
- la paroi de forme cylindrique creuse dans le boîtier forme une surface électrique ou une première moitié de condensateur (20a, 20b) du condensateur (27a, 27b),
- à l'intérieur de cette première moitié de condensateur (20a, 20b) de forme cylindrique est mis en place un cylindre creux (25a, 25b) électriquement conducteur, qui représente la seconde moitié de condensateur (200a, 200b) respective, et forme ainsi le condensateur (27a, 27b),
- un diélectrique, de préférence de forme cylindrique, est inséré entre les premières et deuxièmes moitiés de condensateur (20a, 20b ; 200a, 200b) respectives,
- le cylindre creux (25a, 25b) est réalisé comme un pot cylindrique (29a, 29b), et
- chaque pot cylindrique (29a, 29b) forme un pot de blocage (127a, 127b) avec un conducteur intérieur coaxial (31a, 31 b) respectif, qui est relié électriquement au fond associé (30a, 30b) du pot cylindrique (29a, 29b).

**5.** Découplage à tension continue et/ou à basse fréquence selon l'une des revendications 1 à 4, **caractérisé en ce que** la ligne de jonction (33) qui relie les deux conducteurs intérieurs (31a, 31b) est raccordée électriquement à l'extrémité supérieure du conducteur intérieur respectif (31a, 31b) à l'opposé du fond du pot (30a, 30b).

**6.** Découplage à tension continue et/ou à basse fréquence selon la revendication 5, **caractérisé en ce que** la ligne de jonction (33) est raccordée à ses extrémités aux conducteurs intérieurs (31a, 31 b) au moyen d'un agent de brasage tendre.

**7.** Découplage à tension continue et/ou à basse fréquence selon l'une des revendications 3 à 6, **caractérisé en ce que** les deux lignes ramifiées (7, 9) sont reliées respectivement à la deuxième moitié de condensateur (200a, 200b).

**8.** Découplage à tension continue et/ou à basse fréquence selon la revendication 4, **caractérisé en ce que** les lignes ramifiées (7, 9) sont raccordées au pot de blocage associé (127a, 127b) au niveau de la bordure supérieure (32a, 32b) à l'opposé du fond du pot (30a, 30b), de préférence par brasage avec un agent de brasage tendre. (36).

**9.** Découplage à tension continue et/ou à basse fréquence selon l'une des revendications 4 à 8, **caractérisé en ce que** la hauteur axiale ou la longueur du conducteur intérieur coaxial (31a, 31b), et ainsi la dimension intérieure du pot cylindrique (29a, 29b) du pot de blocage (127a, 127b) correspond à $\lambda/4$, où $\lambda$ est une longueur d'onde qui appartient à une bande de fréquences à transmettre sur la voie HF (3, 5), et représente de préférence une longueur d'onde médiane de la bande de fréquences à transmettre sur la ramification HF (3, 5).

**10.** Découplage à tension continue et/ou à basse fréquence selon l'une des revendications 1 à 9, **caractérisé en ce que**, dans le boîtier (17) à hauteur de la bordure supérieure (32a, 32b) du pot de blocage (127a, 127b) il est prévu un évidement (217) à travers lequel est posée la ligne ramifiée (7, 9).

**11.** Découplage à tension continue et/ou à basse fréquence selon l'une des revendications 1 à 10, **caractérisé en ce que** la ligne ramifiée (7, 9) présente une longueur électrique telle que

$$3\lambda/16 + n \cdot \lambda/2 < L < 5\lambda/16 + n \cdot \lambda/2$$

où $\lambda$ représente une longueur d'onde de la gamme de fréquences à transmettre dans la voie HF, de préférence la longueur d'onde médiane, et n est un nombre naturel, y compris 0 (n = 0, 1, 2, 3 etc.).

12. Découplage à tension continue et/ou à basse fréquence selon l'une des revendications 1 à 11, **caractérisé en ce que** la ligne ramifiée (7, 9) présente une longueur L = $\lambda/4$, où $\lambda$ représente une longueur d'onde de la gamme de fréquences à transmettre dans la voie HF, de préférence la longueur d'onde médiane de la fréquence médiane à transmettre dans la voie HF.

13. Découplage à tension continue et/ou à basse fréquence selon l'une des revendications 1 à 12, **caractérisé en ce que** la ligne ramifiée (7, 9) est rectiligne.

14. Découplage à tension continue et/ou à basse fréquence selon l'une des revendications 1 à 12, **caractérisé en ce que** la ligne ramifiée (7, 9) s'étend de manière incurvée, de préférence sous la forme d'une bobine.

Fig. 1

Fig. 2

Fig. 3

Fig. 4

EP 1 932 205 B1

Fig. 5

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5296825 A
- EP 0746051 A